# FASCICULE DE BREVET EUROPEEN

(11) **EP 3 430 791 B1**
(45) Date de publication et mention de la délivrance du brevet: **01.01.2020**
(21) Numéro de dépôt: 17715245.1
(22) Date de dépôt: 17.03.2017
(51) Int. Cl.: H04L 29/08

(54) **PROCÉDÉ DE CONFIGURATION POUR LE COUPLAGE D'UN TERMINAL MOBILE AVEC UN APPAREIL DE MESURE**
KONFIGURATIONSVERFAHREN ZUR KOPPLUNG EINES MOBILEN ENDGERÄTES AN EIN MESSGERÄT
CONFIGURATION METHOD FOR COUPLING A MOBILE TERMINAL TO A MEASUREMENT APPLIANCE

(30) Priorité: 18.03.2016 FR 1652302
(43) Date de publication de la demande: 23.01.2019
(73) Titulaire: SEB S.A., 69130 Ecully (FR)
(72) Inventeur: CAREGNATO, Stéphane, 74150 Bloye (FR); LAUCHET, Nicolas, 38780 Estrablin (FR)
(74) Mandataire: Soares, Luis Filipe
(86) Numéro de dépôt international: PCT/FR2017/050631
(87) Numéro de publication internationale: WO 2017/158311

(56) Documents cités:
- US-A1- 2010 063 976
- US-A1- 2015 040 685
- US-A1- 2016 042 644

## Description

La présente invention concerne un procédé de traitement de mesures physiques et/ou physiologiques relatives à un profil utilisateur par un terminal mobile.

Il est connu de disposer d'un appareil de mesure physique et/ou physiologique apte à communiquer avec un terminal mobile selon un protocole de communication. Cette disposition permet de transférer des valeurs mesurées par l'appareil de mesure au terminal mobile.

Il est également connu de disposer d'un serveur distant avec lequel le terminal mobile est apte à échanger des informations. Ce serveur peut être utile pour regrouper des valeurs mesurées.

Le regroupement de valeurs mesurées peut par exemple consister à regrouper les valeurs mesurées relatives à un même utilisateur.

Dans ce contexte, la communication entre l'appareil de mesure, le terminal mobile et le serveur est primordiale pour un bon regroupement des valeurs mesurées.

Par ailleurs, un paramétrage de la communication entre ces appareils peut s'avérer fastidieuse avant qu'une communication fiable soit mise en place.

De plus, il peut être désagréable pour un utilisateur d'avoir à paramétrer l'appareil de mesure, le terminal mobile ou le serveur avant de pouvoir utiliser l'appareil de mesure.

Le document de la technique antérieure US2015/0040685 décrit un système de détection et de suivi des impacts aidant les risques de commotion de la tête de détection grâce à une évaluation traditionnelle informatisée combinée. Un autre document de l'art antérieur US2016/0042644 décrit un procédé pour déterminer des conditions de chaussée dangereuses sur la base de données de capteur reçues du véhicule et génère des alertes pour d'autres véhicules.

Il peut également s'avérer délicat de gérer le transfert des valeurs mesurées après une interruption de la communication entre l'appareil de mesure, le terminal mobile et le serveur.

Il est également connu de devoir configurer un profil utilisateur par un terminal mobile pour le couplage d'un terminal mobile avec un appareil de mesure physique et/ou physiologique en demandant à l'utilisateur de compléter son profil utilisateur avec des informations déclaratives alors même que ces informations correspondent à des mesures pouvant être réalisées par l'appareil de mesure physique et/ou physiologique.

Un tel procédé est interprété comme un non-sens pour l'utilisateur.

La présente invention vise à résoudre tout ou partie des inconvénients mentionnés ci-dessus.

A cet effet, la présente invention concerne un procédé de configuration d'un profil utilisateur par un terminal mobile pour le couplage d'un terminal mobile avec un appareil de mesure physique et/ou physiologique, le procédé de configuration comprenant les étapes suivantes :
- création ou modification à partir du terminal mobile d'une information de profil utilisateur comprenant au moins un identifiant utilisateur et au moins une indication relative audit utilisateur,
- détection par le terminal mobile d'un appareil de mesure physique et/ou physiologique apte à échanger des informations avec le terminal mobile selon un premier protocole de communication,
- réception par le terminal mobile d'une requête de demande d'information complémentaire de profil utilisateur en provenance de l'appareil de mesure physique et/ou physiologique, ladite requête étant agencée pour inviter l'utilisateur à utiliser l'appareil de mesure physique et/ou physiologique de manière à permettre au terminal mobile d'obtenir une information complémentaire de profil utilisateur,
- transmission du profil utilisateur à destination de l'appareil de mesure physique et/ou physiologique,
- enregistrement du profil utilisateur dans l'appareil de mesure physique et/ou physiologique.

Ainsi, l'utilisateur est invité à utiliser l'appareil de mesure physique et/ou physiologique pour compléter son profil lors du couplage de l'appareil de mesure physique et/ou physiologique et du terminal mobile.

De plus, cette disposition permet d'une part une bonne attribution des valeurs mesurées à un profil utilisateur en utilisant l'identifiant utilisateur dans chaque information transmise entre l'appareil de mesure, le terminal mobile et le serveur ; d'autre part cette disposition a une dimension cognitive en permettant un apprentissage didactique de l'appareil de mesure par l'utilisateur.

L'appareil de mesure peut également émettre une requête de demande d'information complémentaire de profil utilisateur, si une mesure a été réalisée et qu'elle ne peut être affectée à aucun profil utilisateur.

Cette disposition est intéressante lorsqu'un terminal est à proximité de l'appareil de mesure car il est probable que le détenteur du terminal mobile soit également l'utilisateur de l'appareil de mesure.

Selon un aspect de l'invention, l'étape de création ou de modification de l'information de profil utilisateur est réalisée suite à une étape de saisie d'une commande utilisateur au niveau d'une interface de commande et/ou de contrôle du terminal mobile.

L'utilisateur peut ainsi utiliser le terminal mobile pour créer ou modifier son profil utilisateur : l'information de profil sera ensuite mise à jour sur les appareils de mesures.

Selon un aspect de l'invention, le procédé de configuration du profil utilisateur décrit ci-avant comprend les étapes suivantes :
- détection d'un serveur distant apte à échanger des informations avec le terminal mobile selon un second protocole de communication, puis
- réception par le terminal mobile d'une consigne de création ou modification d'une information de profil utilisateur en provenance du serveur apte à communiquer avec le terminal mobile selon le deuxième protocole de communication cette réception étant réalisée avant l'étape de création ou modification de l'information de profil utilisateur, et/ou
- transmission du profil utilisateur à destination du serveur, cette transmission étant réalisée après l'étape de création ou modification de l'information de profil utilisateur, et de l'étape de réception par le terminal mobile d'une requête de demande d'information complémentaire de profil utilisateur, et
- enregistrement de ladite information de profil utilisateur dans le serveur.

Ainsi le serveur reste maître pour la définition des modifications à apporter au profil utilisateur. Le terminal mobile peut faire remonter une nouvelle information de profil ou une information de profil modifiée mais c'est le serveur qui décide des modifications à apporter au profil.

Cette disposition est intéressante car un même utilisateur pourra modifier son profil depuis n'importe quel terminal mobile parmi un ensemble de terminaux mobiles et disposer de la dernière version de son profil sur un autre terminal mobile de cet ensemble.

La présente invention concerne également un produit programme d'ordinateur comprenant des instructions de code agencées pour mettre en œuvre les étapes d'un procédé de configuration tel que décrit ci-avant, lorsque ledit programme est exécuté sur un processeur d'un terminal mobile.

Selon un aspect de l'invention, le produit programme d'ordinateur tel que décrit ci-dessus est agencé sous forme d'application téléchargeable sur le terminal mobile lorsque ledit programme est exécuté sur le processeur.

La présente invention concerne également un terminal mobile comprenant en mémoire les instructions de code d'un produit programme d'ordinateur tel que décrit ci-dessus, le terminal mobile étant agencé pour exécuter ledit produit programme d'ordinateur.

La présente invention concerne en outre un procédé de traitement de mesures physiques et/ou physiologiques relatives à un profil utilisateur par un terminal mobile comprenant les étapes suivantes :
- détection d'au moins un appareil de mesure physique et/ou physiologique apte à échanger des informations avec le terminal mobile selon un premier protocole de communication, puis acquisition d'une information de mesure en provenance de l'au moins un appareil de mesure physique et/ou physiologique, ladite information de mesure comprenant un identifiant utilisateur et une valeur mesurée horodatée,
- détection d'un serveur distant apte à échanger des informations avec le terminal mobile selon un second protocole de communication, puis transmission d'une information de collecte au serveur distant, ladite information de collecte comprenant l'identifiant utilisateur et la valeur mesurée horodatée, et/ou réception d'une information de mise à jour en provenance du serveur distant, ladite information de mise à jour comprenant l'identifiant utilisateur et une valeur confirmée relative audit utilisateur.

En d'autre termes, l'étape de détection de l'au moins un appareil de mesure physique et/ou physiologique et l'étape de détection d'un serveur distant peuvent être réalisées indépendamment l'une de l'autre selon la détection ou non dudit au moins un appareil de mesure et du serveur.

Il est également à noter qu'une valeur, qu'elle soit mesurée ou confirmée, est issue d'une mesure d'une grandeur physique et/ou physiologique par l'appareil de mesure. Par valeur mesurée, on entend une valeur obtenue par le capteur de l'appareil de mesure et par valeur confirmée on entend une valeur qui a été traitée par le serveur. Le serveur peut procéder à une modification de la valeur mesurée comme par exemple un arrondissement pour que l'information soit moins volumineuse en terme de mémoire.

Ainsi, il est possible de faire remonter l'information de mesure depuis un appareil de mesure vers le terminal mobile dans un premier temps, puis l'information de collecte vers le serveur dans un deuxième temps.

En outre l'information de mise à jour est envoyée au terminal mobile dès que possible. Ainsi le serveur procède au traitement des informations de collecte qui sont remontées et envoie des informations de mise à jour également dès que possible.

Cette disposition est intéressante lorsqu'il n'est pas possible d'être à la fois connecté à un appareil de mesure et au serveur. La synchronisation n'est pas empêchée. De plus comme la valeur mesurée est horodatée, il n'y a pas de confusion possible avec une autre valeur mesurée.

Il est également possible d'utiliser un appareil de mesure lorsque la connexion au terminal mobile n'est pas immédiatement disponible. Dans ce cas, l'appareil de mesure stocke les valeurs mesurées horodatées. Les informations de mesures correspondantes seront envoyées dès que la connexion avec le terminal mobile sera établie.

De préférence, l'ordre entre l'étape de détection de l'appareil de mesure physique et/ou physiologique et l'étape de détection d'un serveur distant n'a pas d'importance. Egalement ces deux étapes peuvent être réalisées simultanément.

Selon un aspect de l'invention, l'étape de transmission de l'information de collecte et l'étape de réception d'une information de mise à jour sont réalisées indépendamment l'une de l'autre. Peu importe l'ordre de ces étapes. Ainsi une seule étape sur les deux peut être réalisée suite à la détection du serveur distant.

Par appareil de mesure physique et/ou physiologique, on entend tout appareil agencé pour mesurer une grandeur physique et/ou une propriété physiologique mesurable d'une partie du corps d'un utilisateur.

Par exemple, une mesure physique et/ou physiologique peut être la mesure d'une bio-impédance. Par mesure d'une bio-impédance, il est entendu mesure d'impédance de tissus biologiques de l'utilisateur.

Ce type de mesure permet par exemple de déterminer, si besoin par l'intermédiaire de calculs ou de corrélations, un indice de masse grasse.

Selon un aspect de l'invention, un appareil de mesure est un mètre ruban électronique agencé pour mesurer un contour d'une partie du corps d'un utilisateur ou une mensuration d'un utilisateur ou un pèse-personne.

Selon un aspect de l'invention, l'appareil de mesure physique et/ou physiologique est agencé pour échanger des informations avec le terminal mobile via un élément de communication intermédiaire.

L'élément de communication intermédiaire est agencé pour échanger des informations d'une part avec l'appareil de mesure et d'autre part avec le teminal mobile.

De préférence, l'élément de communication intermédiaire comprend un équipement de terminaison de réseau Internet et est apte à communiquer selon un protocole déterminé, par exemple un protocole wi-fi, avec l'appareil de mesure et avec le terminal mobile.

En particulier, le terminal mobile est agencé pour échanger des informations avec le serveur via l'élément de communication intermédiaire.

Selon un aspect de l'invention, le terminal mobile est agencé pour émettre une requête de remontée d'informations à destination de l'appareil de mesure, l'appareil de mesure étant agencé pour émettre une information de mesure selon le premier protocole de communication à destination du terminal mobile en réponse à la réception de ladite requête de remontée d'informations. Cette disposition permet d'émettre une requête pour une remontée immédiate des dernières informations de mesure d'un appareil de mesure vers le terminal mobile.

Selon un aspect de l'invention, l'étape de détection de l'au moins un appareil de mesure physique et/ou physiologique est suivie d'une étape de transmission d'une information de copie locale à destination dudit au moins un appareil de mesure physique et/ou physiologique, ladite information de copie locale comprenant l'identifiant utilisateur et la valeur confirmée relative à l'utilisateur.

Ainsi, il est possible, lors de la connexion d'un appareil de mesure au terminal mobile, de sauvegarder localement des informations de copie locale sur cet appareil de mesure.

Cette disposition est intéressante pour un utilisateur utilisant habituellement le même appareil de mesure : il aura ainsi à dispostion ses anciennes valeurs mesurées sans qu'il soit nécessaire qu'il ait son terminal mobile avec lui.

Selon un aspect de l'invention, le procédé de traitement de mesures physiques et/ou physiologiques par un terminal mobile comprend en outre une étape de création et/ou de modification de l'information de copie locale à partir de l'information de mise à jour et/ou de l'information de mesure.

Ainsi c'est le terminal mobile qui créé l'information de copie locale. L'avantage est de pouvoir contrôler quelles informations de copie locale sont envoyées vers un appareil de mesure. Préférentiellement une information de copie locale est envoyée à l'appareil de mesure pour un utilisateur habituel de cet appareil de mesure.

Une création ou modification de l'information de copie locale peut être réalisée dans le cas où une nouvelle information de mesure parvient au terminal mobile et que celui-ci ne peut communiquer avec le serveur.

Dans ce cas, les dernières mesures réalisées sont prises en compte pour créer ou modifier l'information de copie locale avant son envoi. Une synchronisation complète passant par le serveur n'est donc pas nécessaire pour faire redescendre l'information de copie locale vers un appareil de mesure.

Selon un aspect de l'invention, le procédé de traitement de mesures physiques et/ou physiologiques par un terminal mobile comprend en outre une étape de création et/ou de modification de l'information de collecte à partir de l'information de mesure.

Le terminal peut ainsi contrôler quelles mesures il fait parvenir au serveur. Cette disposition permet de ne pas communiquer systématiquement toutes les mesures réalisées vers le serveur mais seulement certaines.

Ceci peut s'avérer utile lorsque la quantité d'informations devant être transférée est importante ou lorsque le débit de transfert est lent. Ainsi les informations de mesures peuvent être transférées selon leur importance.

Selon un aspect de l'invention, l'information de collecte comprend en outre une indication relative à l'utilisateur.

Selon un aspect de l'invention, l'indication relative à l'utilisateur comprend un renseignement propre au profil utilisateur, par exemple la taille de l'utilisateur.

Il est ainsi possible de faire remonter vers le serveur des indications relatives à un utilisateur qui ne sont pas issues de mesures mais qui peuvent être complémentaires pour le serveur.

Ainsi ses indications relatives à l'utilisateur sont prises en compte par le serveur et peuvent influer sur l'information de mise à jour transmise au terminal mobile.

Selon un aspect de l'invention, l'information de mise à jour et/ou l'information de copie locale comprend une indication de retour relative à l'utilisateur.

Cette indication de retour est destinée à être communiquée à l'utilisateur : il peut par exemple s'agir d'une indication signifiant à l'utilisateur qu'il est maintenant descendu au dessous d'un certain poids limite. Cette disposition est intéressante car elle renseigne l'utilisateur sur l'évolution de ses valeurs mesurées.

Selon un aspect de l'invention, l'information de mesure comprend plusieurs valeurs mesurées.

Cette disposition permet de transmettre au terminal mobile plusieurs mesures simultanément. Il peut s'agir de mesures réalisées en plusieurs fois alors que l'utilisateur ne s'est pas connecté avec son terminal mobile entre ces mesures.

Selon un aspect de l'invention, l'information de mise à jour comprend plusieurs valeurs confirmées.

De préférence, l'information de copie locale comprend plusieurs valeurs mesurées.

Ainsi pour un même utilisateur une seule information de mesure, collecte, de mise à jour ou de copie locale peut être envoyée pour plusieurs mesures.

Selon un aspect de l'invention, le terminal mobile échange des informations avec une pluralité d'appareils de mesure physique et/ou physiologique selon le premier protocole de communication.

Il est ainsi possible de faire remonter des informations au serveur à partir de plusieurs appareils de mesure en utilisant le même terminal mobile. Egalement un utilisateur peut indifféremment utiliser un appareil de mesure ou un autre pour réaliser une mesure.

En effet les informations de mesure transitent après par un terminal mobile, qui n'est pas obligatoirement celui de l'utilisateur pour remonter au serveur.

Selon un aspect de l'invention :
- au moins deux informations de mesures en provenance de l'appareil de mesure physique et/ou physiologique sont acquises par le terminal mobile, une première information de mesure comprenant un premier identifiant utilisateur et une première valeur mesurée horodatée, et une deuxième information de mesure comprenant un deuxième identifiant utilisateur et une deuxième valeur mesurée horodatée, et
- au moins deux informations de collecte sont transmises au serveur distant, une première information de collecte comprenant le premier identifiant utilisateur et la première valeur mesurée horodatée et une deuxième information de collecte comprenant le deuxième identifiant utilisateur et la deuxième valeur mesurée horodatée et/ou deux informations de mise à jour sont reçues en provenance du serveur distant, une première information de mise à jour comprenant le premier identifiant utilisateur et une première valeur confirmée relative audit premier utilisateur et une deuxième information de mise à jour comprenant le deuxième identifiant utilisateur et une deuxième valeur confirmée vc relative audit deuxième utilisateur.

Ainsi, il est possible par la simple connexion de l'appareil de mesure au terminal mobile de faire remonter des informations de mesures concernant plusieurs utilisateurs.

Cette disposition est intéressante car, en général seul un utilisateur utilise un terminal mobile. Ainsi même si un seul utilisateur se connecte avec son terminal mobile à l'appareil de mesure, l'ensemble des informations de mesures sont transmises, même celles concernant d'autres utilisateurs.

Ceci permet de faire remonter au serveur des valeurs mesurées concernant des utilisateurs n'ayant pas leurs propres terminaux mobiles à proximité de l'appareil de mesure.

Selon un aspect de l'invention, le terminal mobile transmet une première information de copie locale et une deuxième information de copie locale à destination de l'appareil de mesure, ladite première information de copie locale comprenant le premier identifiant utilisateur et la première valeur confirmée et ladite deuxième information de copie locale comprenant le deuxième identifiant utilisateur et la deuxième valeur confirmée.

Ainsi il est également possible de faire redescendre des informations de copie locale à destination de l'appareil de mesure pour différents utilisateur à partir d'un même terminal. Il n'est ainsi pas nécessaire de disposer d'un terminal mobile par utilisateur.

La présente invention concerne également un produit programme d'ordinateur comprenant des instructions de code agencées pour mettre en œuvre les étapes d'un procédé de traitement tel que décrit ci-dessus lorsque ledit programme est exécuté sur un processeur d'un terminal mobile.

Selon un aspect de l'invention, le produit programme d'ordinateur tel que décrit ci-dessus est agencé sous forme d'application téléchargeable sur le terminal mobile lorsque ledit programme est exécuté sur le processeur.

La présente invention concerne en outre un terminal mobile comprenant en mémoire les instructions de code d'un produit programme d'ordinateur tel que décrit ci-dessus, le terminal mobile étant agencé pour exécuter ledit produit programme d'ordinateur.

La présente invention concerne également, un procédé d'attribution d'une valeur mesurée à un profil utilisateur par un appareil de mesure physique et/ou physiologique, le procédé d'attribution comprenant les étapes suivantes :
- acquisition d'une valeur mesurée par l'appareil de mesure,
- comparaison avec au moins une autre valeur mesurée préalablement selon un critère déterminé et/ou sélection d'un identifiant utilisateur puis création d'une information de mesure comprenant ledit identifiant utilisateur et une valeur mesurée horodatée.

L'attribution d'une valeur mesurée à un profil utilisateur est réalisée en comparant cette valeur mesurée à d'autres valeurs préalablement réalisées. En effet, si deux valeurs sont proches, il y a de fortes chances pour qu'elles se rapportent au même profil utilisateur.

Selon un aspect de l'invention, le critère déterminé correspond à un pourcentage de variation entre la valeur mesurée et l'autre valeur préalablement mesurée.

Selon un aspect de l'invention, la sélection de l'identifiant utilisateur id est réalisée suivant le remplissage ou non du critère déterminé et/ou dans lequel la sélection de l'identifiant utilisateur est réalisée suivant une commande utilisateur par une saisie au niveau de l'appareil de mesure ou par envoi d'une information de profil utilisateur et d'une requête d'attribution en provenance d'un terminal mobile.

Si l'appareil de mesure reconnait par comparaison l'utilisateur, l'attribution de la valeur mesurée à un profil utilisateur peut être réalisée sans intervention de l'utilisateur ou par la confirmation de son identité.

Il est également possible à une personne non enregistrée comme utilisateur de réaliser plusieurs mesures et ensuite de créer un profil utilisateur sur le terminal. Ensuite, sur requête cet ensemble de valeurs mesurées qui ont été regroupées selon le critère déterminé peut être attribué à ce nouveau profil utilisateur.

Il n'est donc pas nécessaire de créer un profil utilisateur sur un terminal mobile pour utiliser un appareil de mesure dans le but de récupérer à terme les valeurs mesurées avant la création du profil utilisateur.

La présente invention concerne également un produit programme d'ordinateur comprenant des instructions de code agencées pour mettre en œuvre les étapes d'un procédé d'attribution d'une valeur mesurée à un profil utilisateur par un appareil de mesure physique et/ou physiologique tel que décrit précédemment, lorsque ledit programme est exécuté sur un circuit de commande de l'appareil de mesure.
La figure 1 est une vue schématique d'un système de mesure physique et/ou physiologique.
La figure 2 est un schéma représentant les étapes d'un procédé de configuration d'un profil utilisateur par un terminal mobile.
La figure 3 est un schéma d'un procédé d'attribution d'une valeur mesurée à un profil utilisateur par un appareil de mesure physique et/ou physiologique.
La figure 4 est un schéma représentant les étapes d'un procédé de traitement de mesures physiques et/ou physiologiques relatives à un profil utilisateur par un terminal mobile.

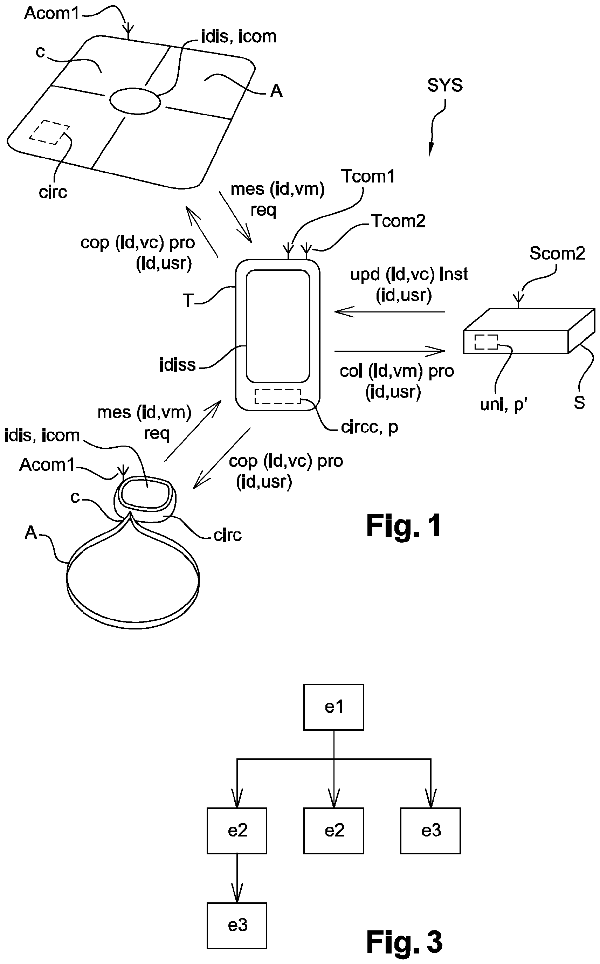

Comme illustré à la figure 1, un système de mesure physique et/ou physiologique SYS comprend un terminal mobile T, un serveur S et deux appareils de mesure A physique et/ou physiologique.

Par mesure physique, il est fait référence à une mesure permettant de déterminer une valeur d'une grandeur physique, par exemple une longueur ou un poids. Par physiologique, il est fait référence à une propriété d'une partie ou totalité du corps d'un utilisateur usr, ladite propriété étant mesurable comme par exemple un contour d'un membre de l'utilisateur ou mensuration. La mesure physique et/ou physiologique est donc appliquée à un utilisateur du système de mesure SYS.

Chaque appareil de mesure A physique et/ou physiologique comprend :
- un capteur c agencé pour mesurer une valeur d'une grandeur physique et/ou physiologique ; une interface de commande icom ;
- une interface d'affichage idis ;
- un circuit de communication Acom1 et
- un circuit de commande circ pourvu d'une mémoire et agencé pour coordonner le fonctionnement de l'appareil de mesure A.

Le circuit de communication Acom1 est agencé pour échanger des informations ou données selon un premier protocole de communication. Le premier protocole de communication est un protocole d'échange d'information à distance, par exemple un premier protocole de communication bidirectionnel par ondes radio.

L'interface de commande icom est agencée pour permettre la saisie d'une commande utilisateur pour effectuer une mesure et/ou enregistrer une mesure en mémoire.

L'interface d'affichage idis est agencée pour afficher une valeur d'une grandeur physique mesurée instantanée et/ou toute autre information comprise en mémoire, comme une valeur enregistrée en mémoire, le nom d'un utilisateur ou une indication relative à la mesure à réaliser comme par exemple « mesure du tour de taille ».

Ainsi, l'interface de commande icom permet à un utilisateur de sélectionner son nom et de procéder à une mesure d'une grandeur physique et/ou physiologique.

Un premier appareil de mesure physique et/ou physiologique A est un pèse personne comprenant un capteur c de poids et le deuxième appareil de mesure physique et/ou physiologique A est un mètre ruban électronique comprenant un capteur c de mesure d'une longueur d'un contour ou de mesure d'une mensuration.

Chaque appareil de mesure physique et/ou physiologique A peut être utilisé seul pour réaliser une mesure instantanée qui s'affiche sur l'interface d'affichage idis.

Chaque appareil de mesure A est également agencé pour enregistrer une valeur mesurée vm en mémoire seule ou en affectant cette valeur à un nom d'utilisateur. La mémoire de chaque appareil de mesure A est dimensionnée pour permettre l'enregistrement d'un nombre défini de valeurs mesurées.

Le circuit de commande circ comprend ainsi des instructions de code agencées pour mettre en œuvre les étapes d'un procédé d'attribution d'une valeur mesurée vm à un profil utilisateur détaillé ci-après.

Lorsque le nombre de valeur défini est atteint, l'utilisateur a la possibilité de supprimer les valeurs les plus anciennes ou les valeurs de son choix de la mémoire pour en enregistrer d'autres.

Comme illustré à la figure 1, le terminal mobile T comprend :
- une interface de commande et/ou de contrôle idiss pourvue d'un écran tactile ;
- un premier circuit de communication Tcom1 apte à échanger des informations selon le premier protocole de communication ;
- un deuxième circuit de communication Tcom2 apte à échanger des informations selon un deuxième protocole de communication et
- un circuit de commande et/ou de contrôle circc agencé pour coordonner le fonctionnement du terminal mobile T et comprenant un processeur p.

Le deuxième protocole de communication est également un protocole de communication bidirectionnel par ondes radio.

Le premier protocole de communication permet un échange bidirectionnel d'informations entre le premier appareil de mesure A et le terminal mobile T d'une part et entre le deuxième appareil de mesure A et le terminal mobile T d'autre part.

Les protocoles concernés peuvent être du type Bluetooth ou BLE, ou encore un protocole de type wi-fi.

Le terminal mobile T est agencé pour être utilisé pour commander à distance le premier appareil de mesure A ou le deuxième appareil de mesure A.

Il est ainsi à noter que le premier appareil de mesure A et le deuxième appareil de mesure A n'échangent pas d'information.

Le processeur p du terminal mobile T est agencé pour exécuter un produit programme d'ordinateur comprenant des instructions de code agencées pour mettre en œuvre les étapes de procédés détaillées ci-après.

Ce produit programme d'ordinateur est agencé sous forme d'application téléchargeable sur le terminal mobile T.

Le serveur S quant à lui comprend un circuit de communication Scom2 apte à échanger des informations selon le deuxième protocole de communication avec le terminal mobile T. Le serveur S comprend en outre une unité de traitement uni pourvue d'un processeur p'.

L'unité de traitement uni est agencée pour regrouper des informations de mesures mes en provenance des appareils de mesure A et communiquées par l'intermédiaire du terminal mobile T, puis mettre à jour les informations comprises en mémoire du terminal mobile T et des appareils de mesures A comme expliqué ci-après.

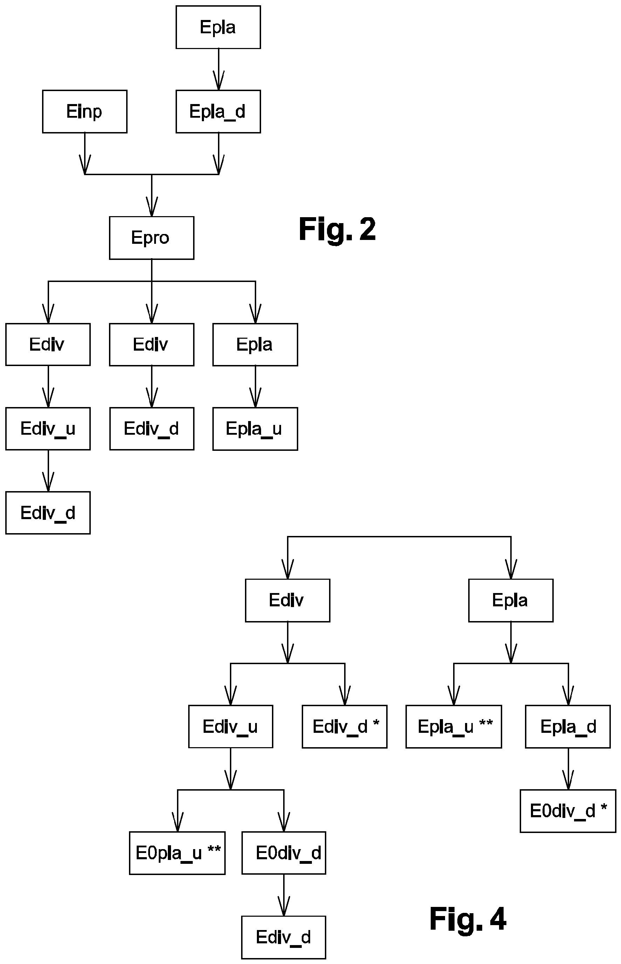

Il est fait référence ci-après à la figure 2 qui détaille les étapes d'un procédé de configuration d'un profil utilisateur par un terminal mobile T.

Selon l'invention, l'utilisateur réalise une étape Einp de saisie d'une commande utilisateur au niveau de l'interface de commande et/ou de contrôle idiss du terminal mobile T suivie d'une étape Epro de création ou modification à partir du terminal mobile T d'une information de profil utilisateur pro comprenant au moins un identifiant utilisateur id et au moins une indication relative audit utilisateur usr.

Cette étape de saisie est réalisée par l'intermédiaire de l'application téléchargeable installée sur le terminal mobile T. Il s'agit de remplir des champs correspondant à des indications relatives à l'utilisateur usr, par exemple son nom, prénom, âge.

Néanmoins cette seule information de profil ne suffit pas à générer un profil utilisateur pro complet, de l'information complémentaire est nécessaire.

C'est ainsi que suite à une étape Ediv de détection par le terminal mobile T d'un ou plusieurs appareils de mesure A physique et/ou physiologique apte(s) à échanger des informations avec le terminal mobile T selon le premier protocole de communication, est réalisée une étape Ediv_u de réception par le terminal mobile T d'une requête de demande d'information complémentaire de profil utilisateur pro en provenance de l'appareil de mesure A physique et/ou physiologique.

Cette requête est agencée pour inviter l'utilisateur à utiliser le ou les appareils de mesure A physique et/ou physiologique de manière à permettre au terminal mobile T d'obtenir une information complémentaire de profil utilisateur pro.

Une fois que le terminal mobile T dispose de cette information complémentaire de profil utilisateur pro alors le terminal mobile T dispose d'un profil utilisateur pro complet.

Le terminal mobile T transmet ensuite ce profil utilisateur pro aux différents appareils de mesure A physique et/ou physiologique qui enregistrent ce profil utilisateur pro.

Selon une variante, une étape Epla de détection du serveur S distant puis une étape Epla_d de réception par le terminal mobile T d'une consigne inst de création ou modification d'une information de profil utilisateur pro en provenance du serveur S sont réalisées.

La consigne inst de création ou de modification comprend un identifiant utilisateur id et une ou plusieurs indications relatives à l'utilisateur usr.

Ensuite, le terminal mobile T procède à l'étape Epro susmentionnée de création ou de modification à partir du terminal T de l'information de profil utilisateur pro comprenant au moins un identifiant utilisateur id et au moins une indication relative audit utilisateur usr.

L'information de profil utilisateur pro sur le terminal mobile T est ainsi définie ou modifiée soit directement à partir des informations saisies par l'utilisateur soit par la consigne inst provenant du serveur S.

Si l'information de profil utilisateur pro est créée ou modifiée selon la première possibilité, alors il est nécessaire de transférer un profil utilisateur pro à jour au serveur S distant. En effet dans ce cas, soit le serveur S distant ne dispose pas d'information de profil utilisateur pro, soit il ne dispose pas de la dernière version modifiée du profil utilisateur pro.

Dans ce cas, le terminal mobile T procède à une étape Epla_u de transmission du profil utilisateur pro à destination du serveur S après l'étape Epro de création ou modification de l'information de profil utilisateur pro et après l'étape Ediv_u de réception par le terminal mobile T d'une requête req de demande d'information complémentaire de profil utilisateur pro.

Le serveur n'a ensuite plus qu'à enregistrer le profil utilisateur pro ainsi mis à jour.

Il est maintenant fait référence ci-après à la figure 3 qui détaille les étapes d'un procédé d'attribution d'une valeur mesurée vm à un profil utilisateur par un appareil de mesure A physique et/ou physiologique.

Chaque appareil de mesure A peut fonctionner de manière indépendante, c'est-à-dire sans être connecté à un terminal mobile T. Ainsi si l'utilisateur possède déjà un profil sur l'appareil de mesure A, toute mesure qu'il réalisera sera synchronisée par la suite avec le serveur S comme expliqué ci-après.

Cependant lorsque l'utilisateur ne possède pas de profil enregistré sur l'appareil de mesure A, la mesure qu'il réalisera sera enregistrée mais ne pourra pas être synchronisée tant qu'il n'aura pas enregistré son profil sur cet appareil de mesure A.

Un procédé d'attribution d'une valeur mesurée vm à un profil utilisateur par un appareil de mesure A physique et/ou physiologique comprend donc dans un premier temps une étape e1 d'acquisition d'une valeur mesurée vm par l'appareil de mesure A.

Ensuite, dans une deuxième étape e2 de comparaison, cette valeur mesurée vm est comparée avec au moins une autre valeur mesurée vm préalablement selon un critère déterminé

Selon un aspect de l'invention, le critère déterminé correspond à un pourcentage de variation entre la valeur mesurée vm et l'autre valeur préalablement mesurée.

Cette étape de comparaison permet de regrouper différentes valeurs mesurées vm très proches en valeur et dans un intervalle de temps court. Il est en effet très probable que ces valeurs soient celles d'un même utilisateur.

Il est ensuite procédé à une troisième étape e3 de sélection d'un identifiant utilisateur id puis la création d'une information de mesure mes comprenant ledit identifiant utilisateur id et une valeur mesurée vm horodatée.

La sélection de l'identifiant utilisateur id est réalisée suivant le remplissage ou non du critère déterminé et/ou suivant une commande utilisateur saisie au niveau de l'appareil de mesure A ou par envoi d'une information de profil utilisateur pro et d'une requête d'attribution en provenance d'un terminal mobile T.

Il existe ainsi plusieurs possibilités pour attribuer une valeur mesurée vm à un utilisateur, ce qui laisse la possibilité à un nouvel utilisateur par exemple de réaliser des mesures avant de créer son profil. Les valeurs mesurées ne seront pas perdues, elles seront synchronisées plus tard lorsque l'utilisateur enregistrera son profil sur l'appareil de mesure A et s'attribuera sa ou ses mesures.

Si l'appareil de mesure A reconnait par comparaison l'utilisateur, l'attribution de la valeur mesurée vm à un profil utilisateur peut être réalisée sans intervention de l'utilisateur ou par simple confirmation de son identité au niveau de l'appareil de mesure A.

Il est maintenant fait référence ci-après à la figure 4 qui détaille les étapes d'un procédé de traitement de mesures physiques et/ou physiologiques relatives à un profil utilisateur par un terminal mobile T.

En détaillant les étapes de ce procédé, il est considéré que l'utilisateur possède un profil qui est enregistré sur le serveur S et qu'il utilise l'appareil de mesure A.

Le procédé de traitement de mesures physiques et/ou physiologiques relatives à un profil utilisateur par un terminal mobile T comprend une étape Ediv de détection d'un appareil de mesure A physique et/ou physiologique apte à échanger des informations avec le terminal mobile T selon le premier protocole de communication.

Le procédé comprend ensuite une étape Ediv_u d'acquisition d'une information de mesure mes en provenance de l'appareil de mesure physique et/ou physiologique A. Cette information de mesure mes comprenant un identifiant utilisateur id et une valeur mesurée vm horodatée.

Ainsi chaque valeur mesurée vm qui est transférée au terminal mobile T depuis l'appareil de mesure A comprend un identifiant id unique. Des valeurs non affectées à un utilisateur ne peuvent être transférées vers le terminal mobile T.

Même si la connexion entre l'appareil de mesure A et le terminal mobile T est interrompue, le procédé comprend une étape Epla de détection d'un serveur S distant apte à échanger des informations avec le terminal mobile T selon le second protocole de communication, puis une étape Epla_u de transmission d'une information de collecte col au serveur S distant.

Cette information de collecte col comprend l'identifiant utilisateur id et la valeur mesurée vm horodatée. Ainsi cette information de collecte col correspond à l'information de mesure mes provenant de l'appareil de mesure A.

Ainsi les étapes détaillées jusqu'ici correspondent à la remontée d'une valeur mesurée vm depuis l'appareil de mesure A jusqu'au serveur S via le terminal mobile T.

Lorsque la détection Epla du serveur S distant est réalisée, le procédé peut comprendre une étape Epla_d de réception d'une information de mise à jour upd en provenance du serveur S distant.

Cette information de mise à jour upd comprend l'identifiant utilisateur id et une valeur confirmée vc relative audit utilisateur.

Cette disposition est intéressante lorsqu'un même utilisateur a plusieurs terminaux mobiles T. Ainsi si une valeur mesurée vm est remontée au serveur S via un premier terminal mobile T, l'utilisateur aura accès à cette valeur en utilisant un deuxième terminal mobile T.

Le procédé peut comprendre en outre une étape E0pla_u de création et/ou de modification de l'information de collecte col à partir de l'information de mesure mes. Le terminal mobile T peut ainsi contrôler quelles mesures il fait parvenir au serveur S.

Cette disposition est également intéressante lorsque plusieurs mesures ont été réalisées : une seule information de collecte col peut être éloborée à partir de plusieurs informations de mesures mes.

En effet, chaque information de mesure mes ou de collecte peut comprendre plusieurs valeurs mesurées vm et chaque information de mise à jour upd ou de copie locale cop peut comprendre plusieurs valeurs validées.

Ainsi toutes les informations de mesures mes parviennent au serveur S et sont ensuite synchronisées avec les terminaux mobiles T et les appareils de mesures A comme expliqué ci-après.

Pour ce faire, le procédé comprend, suite à l'étape Ediv de détection de l'appareil de mesure A, une étape Ediv_d de transmission d'une information de copie locale cop à destination de l'appareil de mesure A.

Cette information de copie locale cop comprend l'identifiant utilisateur id et la valeur confirmée vc relative à l'utilisateur. La copie locale n'est pas forcément nécessaire mais peut être utile par exemple pour un utilisateur changeant d'appareil de mesure A et souhaitant disposer de ses anciennes mesures.

Cette étape Ediv_d de transmission d'une information de copie locale cop peut être précédée d'une étape E0div_d de création et/ou de modification de l'information de copie locale cop à partir de l'information de mise à jour upd et/ou de l'information de mesure mes.

La réalisation de cette étape E0div_d de création et/ou de modification de l'information de copie locale cop peut être bien antérieure à la transmission de l'information de copie locale cop.

Ainsi, comme illustré à la figure 4, cette étape E0div_d est réalisée suite à une étape Epla_d de réception d'une information de mise à jour upd en provenance du serveur S distant. Ainsi comme l'information de copie locale cop est prête, elle sera transférée vers l'appareil de mesure A dès que la connexion sera établie.

Le procédé de traitement de mesures physiques et/ou physiologiques fonctionne de manière analogue avec plusieurs appareils de mesures A et plusieurs terminaux mobiles T.

La synchronisation ainsi permise ne nécessite pas que la communication soit en permanence établie entre les appareils de mesure A, le serveur S et un terminal mobile T.

En effet, un appareil de mesure A peut dans un premier temps se connecter à un terminal mobile T et dans un deuxième temps lorsque cette communication ne fonctionne plus, le terminal mobile T peut se connecter au serveur S.

Cette disposition est particulièrement intéressante, car même si la synchronisation n'est pas immédiate du fait de l'indisponibilité momentanée de connexion, aucune conséquence n'est à craindre puisque toute valeur mesurée vm est horodatée.

Dès lors que les données sont synchronisées avec le serveur S, elles seront disponibles sur tous les terminaux mobiles T sur lesquels l'utilisateur est enregistré.

Ainsi un même utilisateur peut utiliser plusieurs terminaux mobiles T et toujours disposer de la version de son profil et de ses mesures à jour.

Un utilisateur peut également utiliser un grand nombre d'appareil de mesure A. Par exemple, s'il souhaite se peser avec une balance qui n'est pas sa balance habituelle, la valeur mesurée vm de son poids remontera au serveur S et sera disponible sur son terminal mobile T.

Inversement chaque appareil de mesure A peut être utilisé par plusieurs utilisateurs. Ensuite pour que les valeurs mesurées vm de tous les utilisateurs remontent au serveur S, il suffit qu'un seul terminal mobile T se connecte.

Cette disposition est pratique car ainsi un utilisateur n'est pas obligé d'avoir son terminal mobile T à proximité lorsqu'il utilise un appareil de mesure A qui n'est pas son appareil de mesure A habituel.

Le profil de cet utilisateur doit être enregistré sur cet appareil de mesure A comme détaillé plus haut pour que les valeurs mesurées vm remontent au serveur S. Cette tâche peut être effectuée avant ou après la mesure en elle-même, ce qui est pratique pour l'utilisateur.

Le serveur S est maître dans le traitement des valeurs mesurées vm. Ainsi aucune valeur ne peut être perdue si elle a été synchronisée. Si un appareil de mesure A cesse de fonctionner ou si un utilisateur perd son terminal mobile T, les mesures effectuées avant qui ont été synchronisées pourront être réenregistrées sur un nouveau terminal mobile T ou un nouvel appareil de mesure A.

Cette synchronisation permet également d'éviter la génération de doublon car chaque valeur mesurée vm est affectée à un utilisateur unique. Lorsqu'un profil utilisateur est supprimé, il le sera sur tous les terminaux mobiles T et appareils de mesure A.

L'application téléchargeable peut également permettre, en utilisant ou non l'unité de traitement uni du serveur S, d'exploiter les valeurs mesurées vm pour comparer l'évolution d'une grandeur physique et/ou physiologique à un objectif devant être atteint à un moment précis ou pour calculer une valeur médiane ou moyenne de plusieurs mesures.

Disposer de toutes les valeurs mesurées vm est un avantage pour le serveur S. Il est aussi possible de reconnaître les mesures aberrantes et de les supprimer pour ne conserver que les valeurs mesurées vm cohérentes par rapport aux autres.

## Revendications

1. Procédé de configuration d'un profil utilisateur par un terminal mobile (T) pour le couplage d'un terminal mobile (T) avec un appareil de mesure (A) physique et/ou physiologique, le procédé de configuration comprenant les étapes suivantes :
- (Epro) création ou modification à partir du terminal mobile (T) d'une information de profil utilisateur (pro) comprenant au moins un identifiant utilisateur (id) et au moins une indication relative audit utilisateur (usr),
- (Ediv) détection par le terminal mobile (T) d'un appareil de mesure physique et/ou physiologique (A) apte à échanger des informations avec le terminal mobile (T) selon un premier protocole de communication,
- (Ediv_u) réception par le terminal mobile (T) d'une requête (req) de demande d'information complémentaire de profil utilisateur (pro) en provenance de l'appareil de mesure physique et/ou physiologique (A), ladite requête étant agencée pour inviter l'utilisateur à utiliser l'appareil de mesure (A) physique et/ou physiologique de manière à permettre au terminal mobile (T) d'obtenir une information complémentaire de profil utilisateur (pro),
- (Ediv_d) transmission du profil utilisateur (pro) à destination de l'appareil de mesure physique et/ou physiologique (A),
- enregistrement du profil utilisateur (pro) dans l'appareil de mesure (A) physique et/ou physiologique.

2. Procédé de configuration du profil utilisateur selon la revendication 1, dans lequel l'étape (Epro) de création ou de modification de l'information de profil utilisateur (pro) est réalisée suite à une étape (Einp) de saisie d'une commande utilisateur au niveau d'une interface de commande et/ou de contrôle (idiss) du terminal mobile (T).

3. Procédé de configuration du profil utilisateur selon l'une des revendications précédentes, comprenant les étapes suivantes :
- (Epla) détection d'un serveur (S) distant apte à échanger des informations avec le terminal mobile (T) selon un second protocole de communication, puis
- (Epla_d) réception par le terminal mobile (T) d'une consigne (inst) de création ou modification d'une information de profil utilisateur (pro) en provenance du serveur (S) apte à communiquer avec le terminal mobile (T) selon le deuxième protocole de communication cette réception étant réalisée avant l'étape de (Epro) création ou modification de l'information de profil utilisateur (pro), et/ou
- (Epla_u) transmission du profil utilisateur (pro) à destination du serveur (S), cette transmission étant réalisée après l'étape (Epro) de création ou modification de l'information de profil utilisateur (pro) et de l'étape (Ediv_u) de réception par le terminal mobile (T) d'une requête (req) de demande d'information complémentaire de profil utilisateur (pro), et
- enregistrement de ladite information de profil utilisateur (pro) dans le serveur (S).

4. Produit programme d'ordinateur comprenant des instructions de code agencées pour mettre en œuvre les étapes d'un procédé selon l'une des revendications précédentes lorsque ledit programme est exécuté sur un processeur (p) d'un terminal mobile (T).

5. Produit programme d'ordinateur selon la revendication précédente, agencé sous forme d'application téléchargeable sur le terminal mobile (T) lorsque ledit programme est exécuté sur le processeur (p).

6. Terminal mobile (T) comprenant en mémoire les instructions de code d'un produit programme d'ordinateur selon la revendication précédente, le terminal mobile étant agencé pour exécuter ledit produit programme d'ordinateur.

## Patentansprüche

1. Verfahren zur Konfiguration eines Benutzerprofils durch ein mobiles Endgerät (T) zum Koppeln eines mobilen Endgeräts (T) mit einem physikalischen und / oder physiologischen Messgerät (A), wobei das Konfigurationsverfahren die folgenden Schritte umfasst:
- (Epro) Erzeugen oder Ändern einer Benutzerprofilinformation (pro), die mindestens eine Benutzerkennung (id) und mindestens eine Angabe in Bezug auf den Benutzer (usr) umfasst, ausgehend von dem mobilen Endgerät (T)
- (Ediv) Erkennen eines physikalischen und / oder physiologischen Messgeräts (A), das in der Lage ist, Informationen mit dem mobilen Endgerät (T) gemäß einem ersten Kommunikationsprotokoll auszutauschen, durch das mobile Endgerät (T),
- (Ediv_u) Empfangen eine Anfrage (req) zur Anforderung zusätzlicher Benutzerprofilinformation (pro) von dem physikalischen und / oder physiologischen Messgerät (A) durch das mobile Endgerät (T), wobei die Anfrage eingerichtet ist, den Benutzer zur Verwendung des physikalischen und / oder physiologischen Messgeräts (A) einzuladen, um es dem mobilen Endgerät (T) zu ermöglichen, zusätzliche Benutzerprofilinformation (pro) zu erhalten,
- (Ediv_d) Übertragen des Benutzerprofils (pro) an das physikalische und / oder physiologische Messgerät (A),
- Speichern des Benutzerprofils (pro) in dem physikalischen und / oder physiologischen Messgerät (A).

2. Verfahren zur Konfiguration des Benutzerprofils nach Anspruch 1, wobei der Schritt (Epro) zum Erzeugen oder Ändern der Benutzerprofilinformation (pro) nach einem Schritt (Einp) zum Eingeben eines Benutzerbefehls an einer Steuer- und / oder Kontrollschnittstelle (idiss) des mobilen Endgeräts (T) ausgeführt wird.

3. Verfahren zur Konfiguration des Benutzerprofils nach einem der vorstehenden Ansprüche, umfassend die folgenden Schritte:
- (Epla) Erkennen eines entfernten Servers (S), der in der Lage ist, Informationen mit dem mobilen Endgerät (T) gemäß einem zweiten Kommunikationsprotokoll auszutauschen, dann
- (Epla_d) Empfangen eines Sollwerts (inst) zum Erzeugen oder Ändern einer Benutzerprofilinformation (pro) durch das mobile Endgerät (T) von dem Server (S), der in der Lage ist, mit dem mobilen Endgerät (T) gemäß dem zweiten Kommunikationsprotokoll zu kommunizieren, wobei dieses Empfangen vor dem Schritt (Epro) des Erzeugens oder Änderns der Benutzerprofilinformation (pro) ausgeführt wird, und / oder
- (Epla_u) Übertragen des Benutzerprofils (pro) an den Server (S), wobei diese Übertragung nach dem Schritt (Epro) des Erzeugens oder Änderns der Benutzerprofilinformation (pro) und dem Schritt (Ediv_u) des Empfangens einer Anfrage (req) nach zusätzlicher Benutzerprofilinformation (pro) durch das mobile Endgerät (T) ausgeführt wird, und
- Speichern der Benutzerprofilinformation (pro) auf dem Server (S).

4. Computerprogrammprodukt, umfassend Codeanweisungen zum Implementieren der Schritte eines Verfahrens nach einem der vorstehenden Ansprüche, wenn das Programm auf einem Prozessor (p) eines mobilen Endgeräts (T) ausgeführt wird.

5. Computerprogrammprodukt nach dem vorstehenden Anspruch, das als herunterladbare Anwendung auf dem mobilen Endgerät (T) eingerichtet ist, wenn das Programm auf dem Prozessor (p) ausgeführt wird.

6. Mobiles Endgerät (T), umfassend im Speicher die Codeanweisungen eines Computerprogrammprodukts nach dem vorstehenden Anspruch, wobei das mobile Endgerät eingerichtet ist, das Computerprogrammprodukt auszuführen.

## Claims

1. Method for configuring a user profile by a mobile terminal (T) for the coupling of a mobile terminal (T) with a physical and/or physiological measurement appliance (A), the configuration method comprising the following steps:
- (Epro) creation or modification from the mobile terminal (T) of an item of user profile (pro) information comprising at least one user identification (id) and at least one indication relating to said user (usr),
- (Ediv) detection by the mobile terminal (T) of a physical and/or physiological measurement appliance (A) capable of exchanging information with the mobile terminal (T) according to a first communication protocol,
- (Ediv_u) reception by the mobile terminal (T) of a demand request (req) for complementary user profile (pro) information coming from the physical and/or physiological measurement appliance (A), said request being arranged to ask the user to use the physical and/or physiological measurement appliance (A) so as to make it possible for the mobile terminal (T) to obtain a complementary item of user profile (pro) information,
- (Ediv_d) transmission of the user profile (pro) sent to the physical and/or physiological measurement appliance (A),
- recording of the user profile (pro) in the physical and/or physiological measurement appliance (A).

2. Method for configuring the user profile according to claim 1, wherein the step (Epro) for creating or modifying the user profile (pro) information is done following a step (Einp) of inputting a user command at the level of a command and/or control interface (idiss) of the mobile terminal (T).

3. Method for configuring the user profile according to one of the preceding claims, comprising the following steps:
- (Epla) detection of a remote server (S) capable of exchanging information with the mobile terminal (T) according to a second communication protocol, then
- (Epla_d) reception by the mobile terminal (T) of an instruction (inst) for creating or modifying an item of user profile (pro) information coming from the server (S) capable of communicating with the mobile terminal (T) according to the second communication protocol, this reception being made before the step of (Epro) creating or modifying the user profile (pro) information, and/or
- (Epla_u) transmission of the user profile (pro) sent to the server (S), this transmission being made after the step (Epro) of creating or modifying the user profile (pro) information and the step (Ediv_u) of receiving by the mobile terminal (T) of a demand request (req) for complementary user profile (pro) information, and
- recording said user profile (pro) information in the server (S).

4. Computer program product comprising code instructions arranged to implement the steps of a method according to one of the preceding claims, when said program is executed on a processor (p) of a mobile terminal (T).

5. Computer program product according to the preceding claim, arranged in the form of an app which can be downloaded on the mobile terminal (T) when said program is executed on the processor (p).

6. Mobile terminal (T) comprising, in the memory, code instructions of a computer program product according to the preceding claim, the mobile terminal being arranged to execute said computer program product.
